# EUROPEAN PATENT SPECIFICATION

(11) **EP 3 988 972 B1**
(45) Date of publication and mention of the grant of the patent: **17.09.2025**
(21) Application number: 21200252.1
(22) Date of filing: 30.09.2021
(51) Int. Cl.: G02B 3/14, G02B 27/00, G02B 26/00

(54) **TUNABLE LIQUID LENS**
ABSTIMMBARE FLÜSSIGKEITSLINSE
LENTILLE LIQUIDE RÉGLABLE

(30) Priority: 30.09.2020 DE 102020125506
(43) Date of publication of application: 27.04.2022
(73) Proprietor: Optotune Switzerland AG, 8953 Dietikon (CH)
(72) Inventor: BOSE, Frank, 8953 Dietikon (CH); SMOLKA, Stephan, 8953 Dietikon (CH); Dreesen, Lucas, 8953 Dietikon (CH)
(74) Representative: Schulz Junghans Patentanwälte PartGmbB

(56) References cited:
- EP-A1- 1 884 805
- US-A1- 2008 097 143
- "Orientation independent coma compensating liquid lens ED - Darl Kuhn", IP.COM, IP.COM INC., WEST HENRIETTA, NY, US, 14 March 2019 (2019-03-14), XP013182613, ISSN: 1533-0001

## Description

A tunable liquid lens is described here and in the following. The tunable liquid lens is a refractive optical device, which comprises at least one liquid material which allows to alter an optical property of the tunable liquid lens intentionally. The optical property may be the optical power.

Tunable liquid lenses are known from EP 1 884 805 A1 which discloses a lens comprising a plurality of liquid layers that may be displaced by electrowetting. Liquid lenses compensating for acceleration force - induced coma are known from "Orientation independent coma compensating liquid lens", (IP.COM No. IPCOM000257845D, IP.COM INC., WEST HENRIETTA, NY, US, 14 March 2019, ISSN: 1533-0001).

According to the present disclosure, the lens comprises a container delimiting a volume. In particular, the container delimits the volume completely on all sides. Along an optical axis of the tunable liquid lens the container is transparent for electromagnetic radiation in a visible wavelength range. The container comprises a window element, which delimits the volume on one side. In particular, the container may comprise two window elements which delimit the volume on opposite sides of the volume.

The volume comprises a first liquid and a second liquid. In particular the first liquid and the second liquid are immiscible. For example, the first liquid is a hydrophobic liquid and the second liquid is a hydrophilic liquid or vice versa. A first interface is formed between the first liquid and the second liquid. The first liquid and the second liquid may be immediately adjacent. Here and in the following "immediately adjacent" describes an arrangement, wherein the first liquid and the second liquid are in direct contact and no structural barrier except for the liquids' surface tension separates the liquids which are immediately adjacent to each other.

A second interface is formed between the second liquid and a third liquid. According to a first alternative, the second liquid and the third liquid may be immediately adjacent to each other. In particular, the second and the third liquid are immiscible with each other. According to a second alternative, the second liquid and the third liquid are adjacent to opposite sides of a membrane. In particular, the membrane forms the second interface. The membrane is transparent for electromagnetic radiation in a visible wavelength range.

The second liquid is arranged between the first and the third liquid. The first, the second and the third liquid are transparent for electromagnetic radiation in a visible wavelength range. The first liquid has a first refractive index, the second liquid has a second refractive index and the third liquid has a third refractive index. In particular, the second refractive index is different from the first and the third refractive index. Said difference may be at least 0.01. Thus, light is being refracted at the first interface and at the second interface. For example, the first refractive index, the second refractive index and the third refractive index is in a range from 1.2 to 1.6. The first liquid, the second liquid and the third liquid may have an Abbe Number from 30 to 120.

The curvature of the first and the second interface is adjustable. Adjusting the curvature of the first and the second interface enables to alter the optical power of the liquid tunable lens.

The first liquid has a first mass density, the second liquid has as a second mass density and the third liquid has a third mass density. The refractive indices and the mass densities of the first, the second and the third liquid and the stiffness of the membrane, if a membrane forms the second interface, are adjusted to compensate for coma induced by acceleration forces. Here and in the following acceleration forces comprise gravitational acceleration. In particular, the said properties are selected such, that gravitationally induced coma is compensated passively.

The optical power of the lens is adjustable by altering the curvature of the first interface and/or the second interface. The curvature s may be altered by means of electrowetting. Here and in the following the term "electrowetting" refers to a modification of the wetting properties of a surface (which is typically hydrophobic) with an applied electric field. For example, the container may comprise electrodes to which an electric field is applied to modify the wetting properties of the sidewalls of the container. By adjusting the contact angle of the first and the second liquid and/or the second and the third liquid, the curvature of the first interface and/or the second interface is altered. If the second interface is formed by a membrane, the curvature may be adjusted by moving second liquid or third liquid. For example, a lens shaper pushes against the membrane along the optical axis. By pushing against the membrane, the curvature of the membrane is altered. The curvature of the membrane may be adjusted by displacement of the liquid. The liquid may be displaced by means of the lens shaper, which is arranged to apply a pressure on a surface of the membrane. For example, the lens shaper has a frame like shape, wherein the frame like shape surrounds a portion of the membrane. The portion of the membrane may change its curvature, when the liquid is displaced by means of the lens shaper. The liquid may be displaced by means of a pumping device. The pumping device is arranged to move liquid in the container, which may cause a dedicated deformation of the membrane.

According to an embodiment not according to the claimed invention, the tunable liquid lens comprises the container delimiting a volume, wherein the volume comprises the first liquid and the second liquid. The first interface is formed between the first liquid and the second liquid, wherein the first liquid and the second liquid are immediately adjacent. The second interface is formed between the second liquid and the third liquid, wherein the second liquid and the third liquid are immediately adjacent to each other or the second liquid and the third liquid are adjacent to opposite sides of the membrane. The optical power of the lens is adjustable by altering the curvature of the first interface and/or the second interface, and the refractive indices and the mass densities of the first liquid, the second liquid and the third liquid and the stiffness of the membrane are adjusted to compensate for coma induced by acceleration forces.

A liquid tunable lens described herein is based, among other things, on the following considerations. Tuning of a tunable lens alters a dedicated optical property and additionally introduces changes in optical aberrations. Thus, designing optical systems comprising a tunable lens is particularly challenging.

Among other things, the liquid tunable lens described herein makes use of the idea that the first interface may compensate for optical aberrations introduced by the second interface or vice versa. In particular, the second interface may compensate gravitational coma of the first interface. Advantageously, the liquid tunable lens has particularly low aberrations, for example particularly low coma. Thus, the present tunable liquid lens allows imaging with particularly high image quality.

According to the present disclosure, the first liquid has a first refractive index and a first mass density, the second liquid has a second refractive index and a second mass density. According to a first alternative the first mass density is smaller than the second mass density, and the first refractive index is larger than the second refractive index. According to a second alternative the first mass density is larger than the second mass density, and the first refractive index is smaller than the second refractive index. Further advantages and advantageous refinements and developments of the liquid tunable lens result from the following exemplary embodiments illustrated in connection with the figures.
Figure 1 shows an exemplary embodiment of a liquid tunable lens according to the claimed invention,
Figure 2 and 3 show exemplary embodiments of the liquid tunable lens not according to the claimed invention, wherein the curvature of the first and the second interface are controlled by means of electrowetting;
Figure 4 and 5 show exemplary embodiments of the liquid tunable lenses not according to the claimed invention, wherein the curvature of the first interface is controlled by means of electrowetting and the second interface comprises a membrane.

Identical, similar or identically acting elements are provided with the same reference symbols in the figures. The figures and the proportions of the elements shown in the figures among one another are not to be considered to scale. Rather, individual elements can be exaggerated in size for better representation and/or for better comprehensibility.

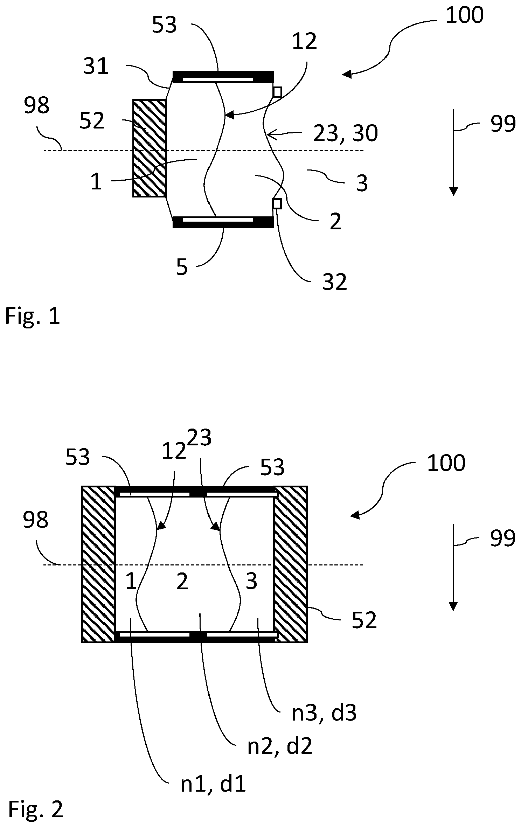

Figure 1 shows an exemplary embodiment of a tunable lens 100 according to the claimed invention, wherein a first liquid 1 and a second liquid 2 are contained in a volume 50. The volume 50 is delimited by a container 5, having a window element 52 and a membrane 30. The first 1 and the second 2 liquid are directly adjacent to each other and form a first interface 12. The first 1 and the second 2 liquid are immiscible. The curvature of the first interface 12 is altered by means of electrowetting. For this purpose, the container 5 comprises electrodes 53, by means of which the contact angle of the first interface 12 with respect to a lateral wall 51 of the container 5 may be adjusted, to control the curvature of the first interface 12.

On a side facing away from the first interface 12, the second liquid 2 is adjacent to the membrane 30.

The curvature of the membrane 30 is altered by displacement of the second liquid 2. In particular, the second liquid is pumped in and out of the volume 50 to alter the curvature of the membrane 30. Alternatively, the lens 100 comprises a lens shaper 32, which is in direct contact with a surface of the membrane 30. The lens shaper may have a frame-like structure and the lens shaper may push or pull on the membrane 30, whereby a concave and/or convex curvature may be altered. The membrane 30 delimits the volume 50 on one side and provides an optical surface. The curvature of the membrane 5 may be controlled by displacement of the liquids within the volume. The liquids may be displaced by directly applying pressure onto the membrane by means of a shaping element. Alternatively, the liquids may be displaced by pumping liquid in and out of the volume 50.

In this embodiment, the container 5 is surrounded by a gaseous medium, in particular air.

The optical properties, in particular the optical power of the lens 100, are adjustable by controlling the shape of the first 12 and the second interface 23.

On a side opposing the membrane 30 along an optical axis 98, a second membrane 31 delimits the volume 50. The window element 52 is mounted on the second membrane 31, whereby the window element 52 may be moved with respect to the container 5. The lens shaper 32 remains in a fixed position with respect to the container 5. Thus, a movement of the window element 52 causes change of the curvature of a section of the membrane, which is surrounded by the lens shaper 32. Thus, a movement of the window element 52 causes a displacement of the liquids in the container 5, which results in a change of the curvature of the second interface 23. The window element 52 is biplanar and rigid. Alternatively, the window element may be a rigid lens having curved surfaces. The liquids 1, 2 in the volume 50, the window element 52 and the membrane 30 are transparent for electromagnetic radiation in at least one common wavelength range. Said wavelength range is preferably in the spectrum of visible light.

The optical axis 98 extends obliquely, in particular perpendicularly, with respect to gravitational force 99. The gravitational force 99 causes a bulge of the first interface 12 and the second interface 23. However, the mass densities and the refractive indices of the liquids 1, 2 comprised in the volume 50 are selected such that the first interface 12 compensates gravitational coma of the second surface 23, or vice versa. In particular, the first liquid 1 has a first refractive index n1 and a first mass density d1, the second liquid 2 has a second refractive index n2 index and a second mass density d2 and the gas 3 has a third refractive index n3 and a third mass density d3. The first mass density d1 is smaller than the second mass density d2 and the first refractive index n1 is larger than the second refractive index n2. The second mass density d2 is larger than the third mass density n3 and the second refractive index n2 is smaller than the third refractive index n2.

Figure 2 shows an exemplary embodiment of a tunable liquid lens 100 not according to the claimed invention, wherein the optical axis 98 of the lens 100 is arranged perpendicular to the direction of the gravitational force 99. The tunable liquid lens 1 comprises a container 5. The container 5 delimits a volume 50, which is filled with the first liquid 1, the second liquid 2 and the third liquid 3. Between the first liquid 1 and the second liquid 2 the first interface 12 is formed. The first 1 and the second 2 liquid are directly adjacent to each other and the first 1 and the second 2 liquid are immiscible with each other. The first and the second liquid have different refractive indices. Therefore, the first interface 12 is an optical surface. Between the second liquid 2 and the third liquid 3 a second interface 23 is formed. The second 2 and the third 3 liquid are directly adjacent to each other and the second 2 and the third 3 liquid are immiscible with each other. The second and the third liquid have different refractive indices. Therefore, the second interface 23 is an optical surface.

The container 5 comprises electrodes 53. The electrodes 53 are arranged in a lateral wall 51 of the container 2, which surrounds the volume 50 circumferentially. The curvature of the first 12 and the second 23 interface 6 is controlled by means of electrowetting. In other words, the contact angle between the lateral wall 51, the first liquid 1 and the second liquid 2 is controlled by a voltage applied to the electrode 53 and the contact angle between the lateral wall 51, the second liquid 2 and the third liquid 3 is controlled by a voltage applied to the electrode 53. In particular, the electrode 53 may comprise multiple segments, which are arranged circumferentially around the volume. The voltage applied to each segment may be controlled separately. Thus, the said contact angles may be controlled separately at each segment.

The container 5 comprises two window elements 52 which delimit the volume 50 along the optical axis 98 on opposing sides. In particular, the container is hermetically sealed.

The first mass density d1 is smaller than the second mass density d2 and the first refractive index n1 is larger than the second refractive index n2. The second mass density d2 is larger than the third mass density n3 and the third refractive index n3 is smaller than the second refractive index n2.

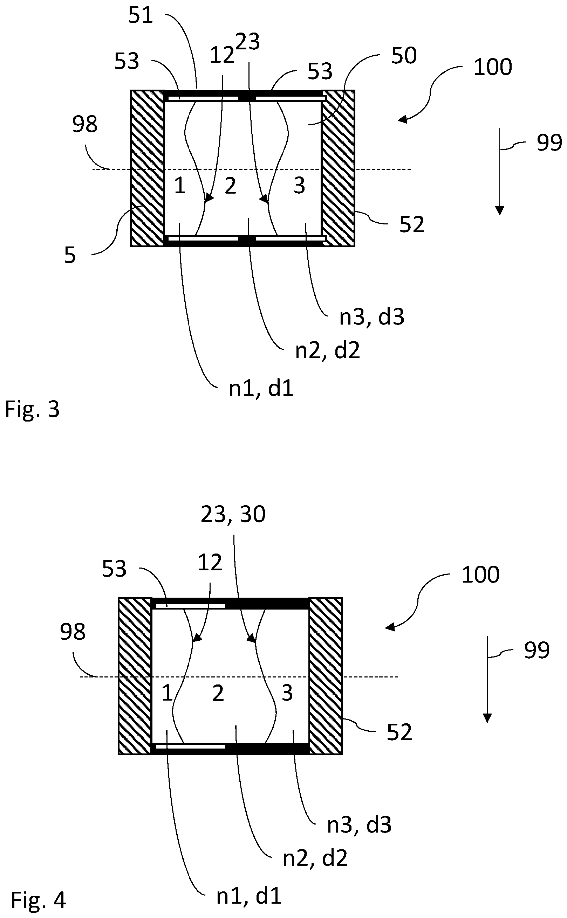

Figure 3 shows an exemplary embodiment of a tunable liquid lens 100 not according to the claimed invention in a schematic sectional view. In contrast to the embodiment shown in figure 2, the first interface 12 and the second interface 23 bulge in the opposite direction. The first mass density d1 is larger than the second mass density d2 and the first refractive index n1 is smaller than the second refractive index n2. The second mass density d2 is smaller than the third mass density n3 and the second refractive index n2 is larger than the third refractive index n3. The mass densities and the refractive indices of the liquids 1, 2, 3 comprised in the volume 50 are selected such that the first interface 12 compensates gravitational coma of the second interface 23 or vice versa.

Figure 4 shows an exemplary embodiment of a tunable liquid lens 100 not according to the claimed invention in a schematic sectional view. By
contrast to the embodiment shown in figure 1, the volume 50 comprises the third liquid 3. Thus, the volume 50 comprises the first liquid 1 the second liquid 2 and the third liquid 3. The curvature of the first interface is altered by means of electrowetting. The membrane 30 forms the second interface 23 between the second liquid 2 and the third liquid 3. The curvature of the second interface is altered by displacement of the second 2 and/or third 3 liquid.

The gravitational coma of the first interface 12 may be compensated by means of the second interface 23 or vice versa. The refractive indices n1, n2, n3, the mass densities d1, d2, d3 and the stiffness of the membrane 30 are selected such that gravitational coma is compensated. For example, the first mass density d1 is smaller than the second mass density d2 and the first refractive index n1 is larger than the second refractive index n2. The second mass density d2 is larger than the third mass density n3 and the second refractive index n2 is smaller than the third refractive index n3.

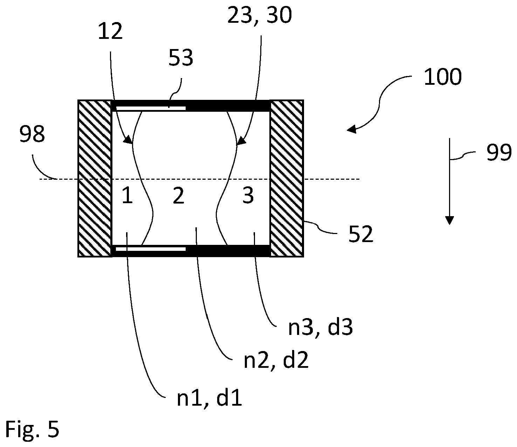

Figure 5 shows an exemplary embodiment of a tunable liquid lens 100 not according to the claimed invention in a schematic sectional view. By
contrast to the embodiment shown in figure 4 the ratio of the mass densities d1, d2, d3 and the ratio of the refractive indices n1, n2, n3 differ. The gravitational coma of the first interface 12 may be compensated by means of the second interface 23 or vice versa. The refractive indices n1, n2, n3, the mass densities d1, d2, d3 and the stiffness of the membrane 30 are selected such that gravitational coma is compensated. In particular, the first mass density d1 is larger than the second mass density d2 and the first refractive index n1 is smaller than the second refractive index n2. The second mass density d2 is smaller than the third mass density n3 and the second refractive index n2 is larger than the third refractive index n3.

### List of reference numerals

- 1: First liquid
- 2: Second liquid
- 3: Third liquid
- 5: Container
- 12: First interface
- 23: Second interface
- 30: Membrane
- 31: Second membrane
- 32: Lens shaper
- 100: Tunable liquid lens
- 5: Container
- 50: volume
- 51: Lateral wall
- 52: Window element
- 53: Electrode
- 98: Optical axis
- 99: acceleration force
- 100: liquid tunable lens
- n1: first refractive index
- n2: second refractive index
- n3: third refractive index
- d1: first mass density
- d2: second mass density
- d3: third mass density

## Claims

1. Tunable liquid lens (100) comprising
- a container (5) delimiting a volume (50), wherein the volume (50) comprises a first liquid (1) and a second liquid (2),
- a first interface (12) is formed between the first liquid (1) and the second liquid (2), wherein the first liquid (1) and the second liquid (2) are immediately adjacent,
- a second interface (23) is formed between the second liquid (2) and a gas (3), wherein the second liquid (2) and the gas (3) are adjacent to opposite sides of a membrane (30),
- the optical power of the lens (100) is adjustable by altering the curvature of the first interface (12) and/or the second interface (23), and
- the refractive indices and the mass densities of the first liquid (1), the second liquid (2) and the gas (3) and the stiffness of the membrane (30) are adjusted to compensate for coma induced by acceleration forces (99).

2. Tunable liquid lens according to one of the preceding claims, wherein the curvature of the first interface (12) is altered by means of electrowetting.

3. Tunable liquid lens (100) according to one of the preceding claims, wherein the gas (3) is air.

4. Tunable liquid lens (100) according to claim 3, wherein the curvature of the membrane (30) is altered by displacement of the second liquid and/or gas.

5. Tunable lens (100) according to one of the preceding claims, wherein acceleration forces (99) are gravitational forces.

6. Tunable liquid lens (100) according to one of the preceding claims, wherein the container (5) comprises a lateral wall (51), wherein the lateral wall (51) extends circumferentially around the volume (50) and the lateral wall (51) is elastically deformable, particularly such that the elastic deformation of the lateral wall (51) compensates a thermal expansion of the liquids (1, 2, 3) in the volume (50).

7. Tunable liquid lens (100) according to one of the preceding claims, wherein
the container (5) comprises a window element (52),
the window element (52) delimits the volume (50) on one side, and
the window element (52) is a rigid transparent biplanar plate or a rigid lens.

8. Tunable liquid lens (100) according to one of the preceding claims **characterized in that**
- the first liquid (1) has a first refractive index (n1) and a first mass density (d1),
- the second liquid (2) has a second refractive index (n2) and a second mass density (d2),
- the gas (3) has a third refractive index (n3) and a third mass density (d3), wherein
- the first mass density (d1) is smaller than the second mass density (d2), the first refractive index (n1) is larger than the second refractive index (n2),
the third mass density (d3) is smaller than the second mass density (d2), and
the third refractive index (n3) is larger than the second refractive index (n2).

9. Tunable liquid lens (100) according to one of the claims 1 to 7 **characterized in that**
- the first liquid (1) has a first refractive index (n1) and a first mass density (d1),
- the second liquid (2) has a second refractive index (n2) and a second mass density (d2),
- the gas (3) has a third refractive index (n3) and a third mass density (d3), wherein
- the first mass density (d1) is larger than the second mass density (d2), and wherein the first refractive index (n1) is smaller than the second refractive index (n2), and
the third mass density (d3) is larger than the second mass density (d2) and the third refractive index (n3) is smaller than the second refractive index (n2).

10. Tunable liquid lens (100) according to claim 7, comprising a second membrane (31), wherein
- the second membrane and/or the window element delimits the volume on one side along the optical axis of the tunable liquid lens,
- the second membrane is extensively connected to the window element,
- the second membrane provides a movable bearing of the window element, which enables the window element to be movable with respect to the lateral wall of the container along the optical axis, and
- movement of the window element results in an altered curvature of the second interface.

11. Tunable liquid lens (100) according to one of the preceding claims, wherein the first immiscible liquid has a first refractive index and a first mass density, the second immiscible liquid has a second refractive index and a second mass density, and
- the first mass density is smaller than the second mass density, and the first refractive index is larger than the second refractive index, or
- the first mass density is larger than the second mass density, and wherein the first refractive index is smaller than the second refractive index.

## Patentansprüche

1. Abstimmbare Flüssigkeitslinse (100) aufweisend
- einen Behälter (5), der ein Volumen (50) begrenzt, wobei das Volumen (50) eine erste Flüssigkeit (1) und eine zweite Flüssigkeit (2) aufweist,
- eine erste Grenzfläche (12), die zwischen der ersten Flüssigkeit (1) und der zweiten Flüssigkeit (2) gebildet wird, wobei die erste Flüssigkeit (1) und die zweite Flüssigkeit (2) unmittelbar benachbart sind,
- eine zweite Grenzfläche (23), die zwischen der zweiten Flüssigkeit (2) und einem Gas (3) gebildet wird, wobei die zweite Flüssigkeit (2) und das Gas (3) an gegenüberliegenden Seiten einer Membran (30) angrenzen,
- die optische Leistung der Linse (100) durch Änderung der Krümmung der ersten Grenzfläche (12) und/oder der zweiten Grenzfläche (23) einstellbar ist, und wobei
- die Brechungsindizes und die Massendichten der ersten Flüssigkeit (1), der zweiten Flüssigkeit (2) und des Gases (3) sowie die Steifigkeit der Membran (30) eingestellt werden, um das durch Beschleunigungskräfte (99) verursachte Koma zu kompensieren.

2. Abstimmbare Flüssigkeitslinse nach einem der vorhergehenden Ansprüche, wobei die Krümmung der ersten Grenzfläche (12) durch Elektrobenetzung verändert wird.

3. Abstimmbare Flüssigkeitslinse (100) nach einem der vorangehenden Ansprüche, wobei das Gas (3) Luft ist.

4. Abstimmbare Flüssigkeitslinse (100) nach Anspruch 3, wobei die Krümmung der Membran (30) durch Verdrängung der zweiten Flüssigkeit und/oder des Gases verändert wird.

5. Abstimmbare Linse (100) nach einem der vorhergehenden Ansprüche, wobei die Beschleunigungskräfte (99) Gravitationskräfte sind.

6. Abstimmbare Flüssigkeitslinse (100) nach einem der vorhergehenden Ansprüche, wobei der Behälter (5) eine Seitenwand (51) aufweist, wobei sich die Seitenwand (51) umlaufend um das Volumen (50) erstreckt und die Seitenwand (51) elastisch verformbar ist, insbesondere derart, dass die elastische Verformung der Seitenwand (51) eine thermische Ausdehnung der Flüssigkeiten (1, 2, 3) in dem Volumen (50) kompensiert.

7. Abstimmbare Flüssigkeitslinse (100) nach einem der vorhergehenden Ansprüche, wobei
der Behälter (5) ein Fensterelement (52) aufweist,
das Fensterelement (52) das Volumen (50) auf einer Seite begrenzt, und
das Fensterelement (52) eine starre transparente biplanare Platte oder eine starre Linse ist.

8. Abstimmbare Flüssigkeitslinse (100) nach einem der vorhergehenden Ansprüche, **dadurch gekennzeichnet, dass**
- die erste Flüssigkeit (1) einen ersten Brechungsindex (n1) und eine erste Massendichte (d1) aufweist,
- die zweite Flüssigkeit (2) einen zweiten Brechungsindex (n2) und eine zweite Massendichte (d2) aufweist,
- das Gas (3) einen dritten Brechungsindex (n3) und eine dritte Massendichte (d3) aufweist, wobei
- die erste Massendichte (d1) kleiner ist als die zweite Massendichte (d2), der erste Brechungsindex (n1) größer ist als der zweite Brechungsindex (n2),
die dritte Massendichte (d3) kleiner ist als die zweite Massendichte (d2), und
der dritte Brechungsindex (n3) größer ist als der zweite Brechungsindex (n2).

9. Abstimmbare Flüssigkeitslinse (100) nach einem der Ansprüche 1 bis 7, **dadurch gekennzeichnet, dass**
- die erste Flüssigkeit (1) einen ersten Brechungsindex (n1) und eine erste Massendichte (d1) aufweist,
- die zweite Flüssigkeit (2) einen zweiten Brechungsindex (n2) und eine zweite Massendichte (d2) aufweist,
- das Gas (3) einen dritten Brechungsindex (n3) und eine dritte Massendichte (d3) aufweist, wobei
- die erste Massendichte (d1) größer ist als die zweite Massendichte (d2), und wobei der erste Brechungsindex (n1) kleiner ist als der zweite Brechungsindex (n2), und
die dritte Massendichte (d3) größer ist als die zweite Massendichte (d2) und der dritte Brechungsindex (n3) kleiner ist als der zweite Brechungsindex (n2).

10. Abstimmbare Flüssigkeitslinse (100) nach Anspruch 7, umfassend eine zweite Membran (31), wobei
- die zweite Membran und/oder das Fensterelement das Volumen auf einer Seite entlang der optischen Achse der abstimmbaren Flüssigkeitslinse abgrenzt,
- die zweite Membran großflächig mit dem Fensterelement verbunden ist,
- die zweite Membran ein bewegliches Lager des Fensterelements bildet, wodurch das Fensterelement gegenüber der Seitenwand des Behälters entlang der optischen Achse beweglich ist, und
- die Bewegung des Fensterelements zu einer geänderten Krümmung der zweiten Grenzfläche führt.

11. Abstimmbare Flüssigkeitslinse (100) nach einem der vorhergehenden Ansprüche, wobei die erste nicht mischbare Flüssigkeit einen ersten Brechungsindex und eine erste Massendichte aufweist, die zweite nicht mischbare Flüssigkeit einen zweiten Brechungsindex und eine zweite Massendichte aufweist, und
- die erste Massendichte kleiner als die zweite Massendichte ist und der erste Brechungsindex größer als der zweite Brechungsindex ist, oder
- die erste Massendichte größer ist als die zweite Massendichte, und wobei der erste Brechungsindex kleiner ist als der zweite Brechungsindex.

## Revendications

1. Lentille liquide réglable (100) comprenant
- un récipient (5) délimitant un volume (50), dans laquelle le volume (50) comprend un premier liquide (1) et un second liquide (2),
- une première interface (12) est formée entre le premier liquide (1) et le second liquide (2), dans laquelle le premier liquide (1) et le second liquide (2) sont immédiatement adjacents,
- une seconde interface (23) est formée entre le second liquide (2) et un gaz (3), dans laquelle le second liquide (2) et le gaz (3) sont adjacents à des côtés opposés d'une membrane (30),
- la puissance optique de la lentille (100) est ajustable en altérant la courbure de la première interface (12) et/ou la seconde interface (23), et
- les indices de réfraction et les masses volumiques du premier liquide (1), du second liquide (2) et du gaz (3) et la rigidité de la membrane (30) sont ajustés pour compenser le coma induit par des forces d'accélération (99).

2. Lentille liquide réglable selon une des revendications précédentes, dans laquelle la courbure de la première interface (12) est altérée au moyen d'électrowetting.

3. Lentille liquide réglable (100) selon une des revendications précédentes, dans laquelle le gaz (3) est de l'air.

4. Lentille liquide réglable (100) selon la revendication 3, dans laquelle la courbure de la membrane (30) est altérée par déplacement du second liquide et/ou gaz.

5. Lentille réglable (100) selon une des revendications précédentes, dans laquelle des forces d'accélération (99) sont des forces gravitationnelles.

6. Lentille liquide réglable (100) selon une des revendications précédentes, dans laquelle le récipient (5) comprend une paroi latérale (51), dans laquelle la paroi latérale (51) s'étend de manière circonférentielle autour du volume (50) et la paroi latérale (51) est élastiquement déformable, notamment de sorte que la déformation élastique de la paroi latérale (51) compense une dilatation thermique des liquides (1, 2, 3) dans le volume (50).

7. Lentille liquide réglable (100) selon une des revendications précédentes, dans laquelle le récipient (5) comprend un élément de fenêtre (52), l'élément de fenêtre (52) délimite le volume (50) sur un côté et l'élément de fenêtre (52) est une plaque biplane transparente rigide ou une lentille rigide.

8. Lentille liquide réglable (100) selon une des revendications précédentes, **caractérisée en ce que**
- le premier liquide (1) a un premier indice de réfraction (n1) et une première masse volumique (d1),
- le second liquide (2) a un deuxième indice de réfraction (n2) et une deuxième masse volumique (d2),
- le gaz (3) a un troisième indice de réfraction (n3) et une troisième masse volumique (d3), dans laquelle
- la première masse volumique (d1) est inférieure à la deuxième masse volumique (d2), le premier indice de réfraction (n1) est supérieur au deuxième indice de réfraction (n2),
la troisième masse volumique (d3) est inférieure à la deuxième masse volumique (d2), et
le troisième indice de réfraction (n3) est supérieur au deuxième indice de réfraction (n2).

9. Lentille liquide réglable (100) selon une des revendications 1 à 7, **caractérisée en ce que**
- le premier liquide (1) a un premier indice de réfraction (n1) et une première masse volumique (d1),
- le second liquide (2) a un deuxième indice de réfraction (n2) et une deuxième masse volumique (d2),
- le gaz (3) a un troisième indice de réfraction (n3) et une troisième masse volumique (d3), dans laquelle
- la première masse volumique (d1) est supérieure à la deuxième masse volumique (d2), et dans laquelle le premier indice de réfraction (n1) est inférieur au deuxième indice de réfraction (n2), et
la troisième masse volumique (d3) est supérieure à la deuxième masse volumique (d2) et le troisième indice de réfraction (n3) est inférieur au deuxième indice de réfraction (n2).

10. Lentille liquide réglable (100) selon la revendication 7, comprenant une seconde membrane (31), dans laquelle
- la seconde membrane et/ou l'élément de fenêtre délimite le volume sur un côté le long de l'axe optique de la lentille liquide réglable,
- la seconde membrane est largement connectée à l'élément de fenêtre,
- la seconde membrane fournit un palier mobile de l'élément de fenêtre qui permet à l'élément de fenêtre d'être mobile par rapport à la paroi latérale du récipient le long de l'axe optique, et
- un mouvement de l'élément de fenêtre conduit à une courbure altérée de la seconde interface.

11. Lentille liquide réglable (100) selon une des revendications précédentes, dans laquelle le premier liquide immiscible a un premier indice de réfraction et une première masse volumique, le second liquide immiscible a un deuxième indice de réfraction et une deuxième masse volumique, et
- la première masse volumique est inférieure à la deuxième masse volumique, et le premier indice de réfraction est supérieur au deuxième indice de réfraction, ou
- la première masse volumique est supérieure à la deuxième masse volumique, et dans laquelle le premier indice de réfraction est inférieur au deuxième indice de réfraction.
